# EUROPÄISCHE PATENTSCHRIFT

(11) **EP 2 681 469 B1**
(45) Veröffentlichungstag und Bekanntmachung des Hinweises auf die Patenterteilung: **17.08.2016**
(21) Anmeldenummer: 12712568.0
(22) Anmeldetag: 02.03.2012
(51) Int. Cl.: F16J 1/09, F02F 3/22, F02F 3/00

(54) **KOLBEN FÜR EINEN VERBRENNUNGSMOTOR**
PISTON FOR A COMBUSTION ENGINE
PISTON POUR MOTEUR A COMBUSTION

(30) Priorität: 04.03.2011 DE 102011013139
(43) Veröffentlichungstag der Anmeldung: 08.01.2014
(73) Patentinhaber: Mahle International GmbH, 70376 Stuttgart (DE)
(72) Erfinder: SCHARP, Rainer, 71665 Vaihingen (DE)
(74) Vertreter: Stumkat, Ulrich
(86) Internationale Anmeldenummer: PCT/DE2012/000220
(87) Internationale Veröffentlichungsnummer: WO 2012/119584

(56) Entgegenhaltungen:
- DE-A1-102008 055 908
- DE-A1-102008 055 909
- DE-A1-102009 032 916

## Beschreibung

Die vorliegende Erfindung betrifft einen Kolben für einen Verbrennungsmotor, mit einem äußeren umlaufenden Kühlkanal und einem inneren Kühlraum, dessen Kühlraumboden eine Öffnung aufweist, die mit einem separaten Verschlusselement verschlossen ist, das mindestens eine Kühlölöffnung aufweist, wobei das Verschlusselement mittels mindestens zweier am äußeren Rand angeordneter Rastelemente in mindestens einer im Bereich der Öffnung des Kühlraumbodens vorgesehenen Rastnut klemmend gehalten ist.

Ein gattungsgemäßer Kolben ist in der DE 10 2008 055 908 A1 offenbart. Das bekannte Verschlusselement dient dazu, die Öffnung im Kühlraumboden so zu verschließen, dass Kühlöl aus dem inneren Kühlraum in Richtung des Kolbenbolzens kontrolliert abfließen kann, um den Kolbenbolzen zu schmieren. Problematisch hierbei ist, dass das bekannte Verschlusselement im Motorbetrieb aufgrund der beim Kolbenhub darauf einwirkenden Kräfte in seinem Sitz nicht immer zuverlässig gehalten ist. Ein weiterer Kolben ist aus DE 10 2009 032 916 A1 bekannt.

Die Aufgabe der vorliegenden Erfindung besteht darin, einen gattungsgemäßen Kolben so weiterzuentwickeln, dass das Verschlusselement gegenüber den beim Kolbenhub darauf einwirkenden Kräften zuverlässig lagegesichert ist.

Die Lösung besteht darin, dass das Verschlusselement mindestens zwei Federlappen aufweist, die sich jeweils an einer im Kolbeninneren vorgesehenen Anlagefläche derart abstützen, dass das Verschlusselement unter axialer Vorspannung in der Rastnut gehalten ist.

Die erfindungsgemäße Ausgestaltung ermöglicht es, die Öffnung im Kolbenboden zuverlässig und wirksam gegenüber den beim Kolbenhub wirkenden Kräften zu verschließen. Ein Flattern des Verschlusselements wird vermieden. Dies wird dadurch bewirkt, dass im montierten Zustand eine Federvorspannung zwischen den Federlappen und den Rastelementen wirkt. Diese Federvorspannung wirkt in axialer Richtung und stabilisiert das Verschlusselement gegenüber den beim Kolbenhub wirkenden Kräften in seinem Sitz. Die Federvorspannung kann in an sich bekannter Weise über die Dicke des gesamten Verschlusselements bzw. einzelner seiner Bereiche und/oder über im Verschlusselement eingebrachte Sicken eingestellt werden. Das Verschlusselement wird aus einem Stahlfederblech hergestellt.

Erfindungsgemäß wird vorgesehen, dass die Federlappen sich jeweils an einer im Bereich der Nabenanbindungen vorgesehenen Anlagefläche abstützen. In diesem Bereich können in den Naben ausgebildete Flächenbereiche als Anlagefläche dienen. Die mindestens eine Rastnut wird ebenfalls im Bereich der Nabenanbindungen vorgesehen, um eine optimale Federvorspannung zu erzielen.

Die mindestens zwei Rastelemente und die mindestens zwei Federlappen liegen einander diametral gegenüber. Durch diese Anordnung ist die günstigste Kräfteverteilung gewährleistet.

Vorteilhafte Weiterbildungen ergeben sich aus den Unteransprüchen.

Die Rastelemente sind vorzugsweise als Rastzungen ausgebildet. Derartige Rastzungen sind sehr flexibel und federwirksam.

Das Verschlusselement weist vorzugsweise zwei oder mehr Kühlölöffnungen auf, so dass eine sehr genau dosierte Menge Kühlöl aus dem inneren Kühlraum in Richtung des Kolbenbodens abfließen kann.

Die mindestens eine Kühlölöffnung im Verschlusselement kann als übliche runde Öffnung oder bspw. auch als sich vom Rand des Verschlusselements nach innen erstreckender Schlitz ausgebildet sein.

Die Rastelemente und/oder die Federlappen können von sich radial nach innen erstreckenden Schlitzen begrenzt sein, die sich vom Rand des Verschlusselements nach innen erstrecken und ebenfalls als Kühlölöffnungen dienen. Zugleich wird die Flexibilität der Rastelemente bzw. der Federlappen erhöht.

Ferner kann zwischen dem Kolbeninneren und dem Verschlusselement im Bereich der Federlappen ein schmaler Spalt vorgesehen sein, der ebenfalls zur Kontrolle des Kühlölflusses dienen kann.

Die Öffnung im Kühlraumboden und das Verschlusselement sind in der Regel im Wesentlichen rund ausgebildet. Falls die Öffnung im Kühlraumboden oval oder als Langloch ausgebildet ist, weist das Verschlusselement zweckmäßigerweise eine hierzu korrespondierende Form auf.

Der erfindungsgemäße Kolben kann als einteiliger Kolben ausgebildet sein. Er kann auch aus einem Kolbenoberteil und/oder das Kolbenunterteil hergestellt sein. Diese können Gießteile oder Schmiedeteile sein, und bspw. aus einem Stahlwerkstoff hergestellt sein. Als Fügeverfahren bietet sich bspw. das Reibschweißen an.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: ein Ausführungsbeispiel eines erfindungsgemäßen Kolbens im Schnitt;
- Fig. 2: der Kolben gemäß Figur 1 in einer um 90° gedrehten Darstellung im Schnitt;
- Fig. 3: der Kolben gemäß Figur 1 in einer Ansicht von unten;
- Fig. 4: das Verschlusselement für den Kolben gemäß Figur 1;
- Fig. 5: eine perspektivische Ansicht des Kolbens gemäß Figur 1 mit dem eingesetzten Verschlusselement gemäß Figur 4, teilweise im Schritt;
- Fig. 6: eine vergrößerte Teildarstellung des Verschlusselements gemäß Figur 5.

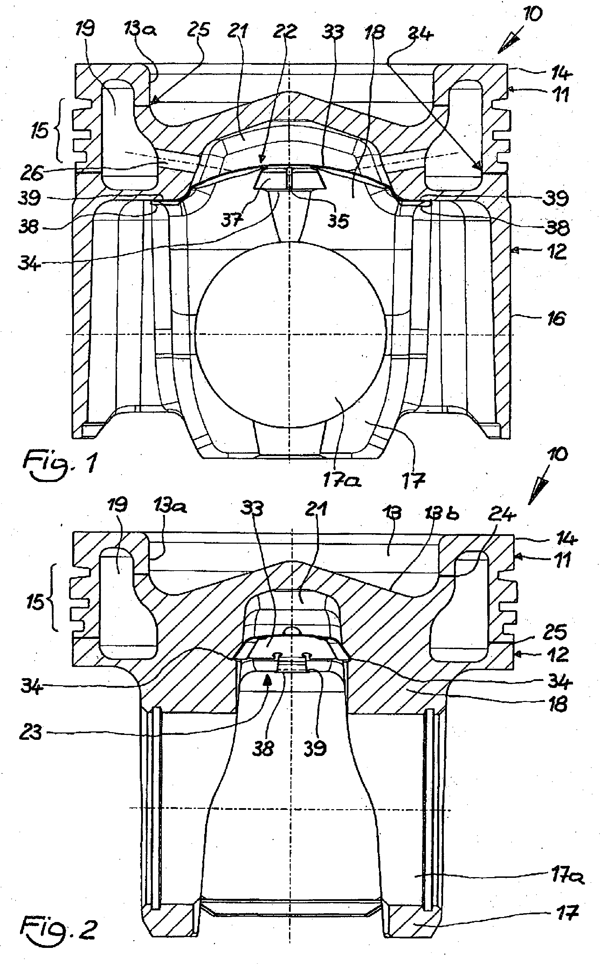

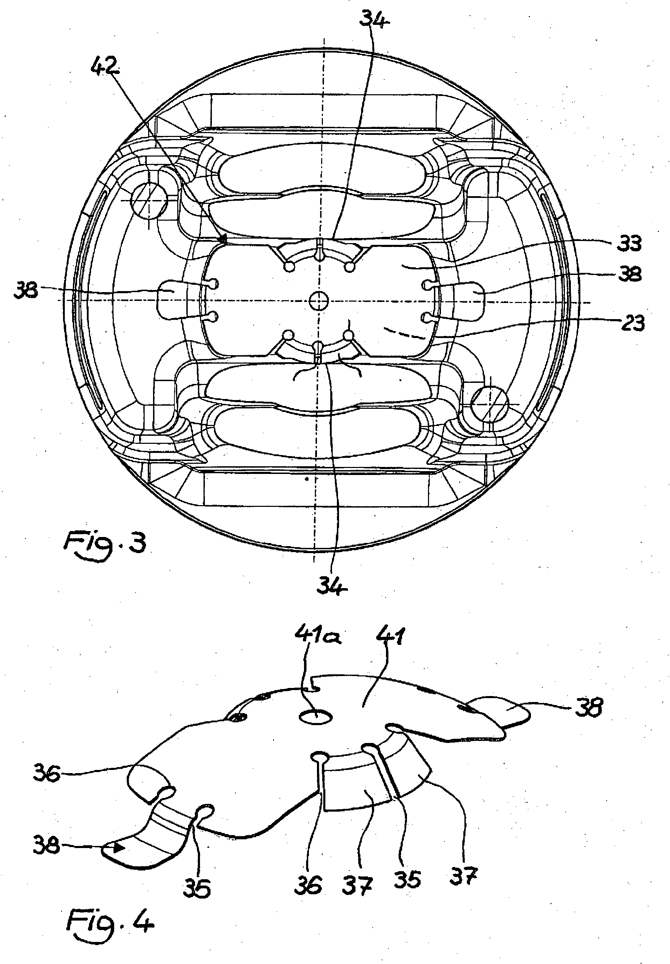

Die Figuren 1 bis 3 zeigen ein Ausführungsbeispiel eines erfindungsgemäßen Kolbens 10, der im Ausführungsbeispiel aus einem Stahlwerkstoff geschmiedet ist. Der erfindungsgemäße Kolben 10 ist im Ausführungsbeispiel ein mehrteiliger Kolben und setzt sich zusammen aus einem Kolbenoberteil 11 und einem Kolbenunterteil 12. Das Kolbenoberteil 11 bildet einen Wandbereich 13a einer Verbrennungsmulde 13, einen umlaufenden Feuersteg 14 und eine umlaufende Ringpartie 15 mit Ringnuten zur Aufnahme von Kolbenringen. Das Kolbenunterteil 12 weist einen Kolbenschaft 16 mit Kolbennaben 17 und Nabenanbindungen 18 auf. Die Kolbennaben 17 sind mit Nabenbohrungen 17a zur Aufnahme eines Kolbenbolzens versehen. Das Kolbenunterteil bildet ferner den Bodenbereich 13b der Verbrennungsmulde 13. Das Kolbenoberteil 11 und das Kolbenunterteil 12 bilden einen umlaufenden äußeren Kühlkanal 19. Das Kolbenunterteil 12 weist ferner einen zentrischen inneren Kühlraum 21 auf. Der Kühlraumboden 22 des Kühlraums 21 ist mit einer im Ausführungsbeispiel etwa langlochförmigen Öffnung 23 (vgl. Figuren 2 und 3) versehen. Das Kolbenoberteil 11 und das Kolbenunterteil 12 sind über eine äußere Fügenaht 24 und eine innere Fügenaht 25 miteinander verbunden, bspw. mittels eines Scfiweiß- oder Lötverfahrens. Ein Kühlölkanal 26 ist im Kolbenunterteil 12 vorgesehen und verbindet den Kühlkanal 19 mit dem Kühlraum 21. Der Kühlölkanal 26 verläuft ausgehend vom Kühlkanal 19 in einem Winkel abwärts in Richtung des Kühlraums 21.

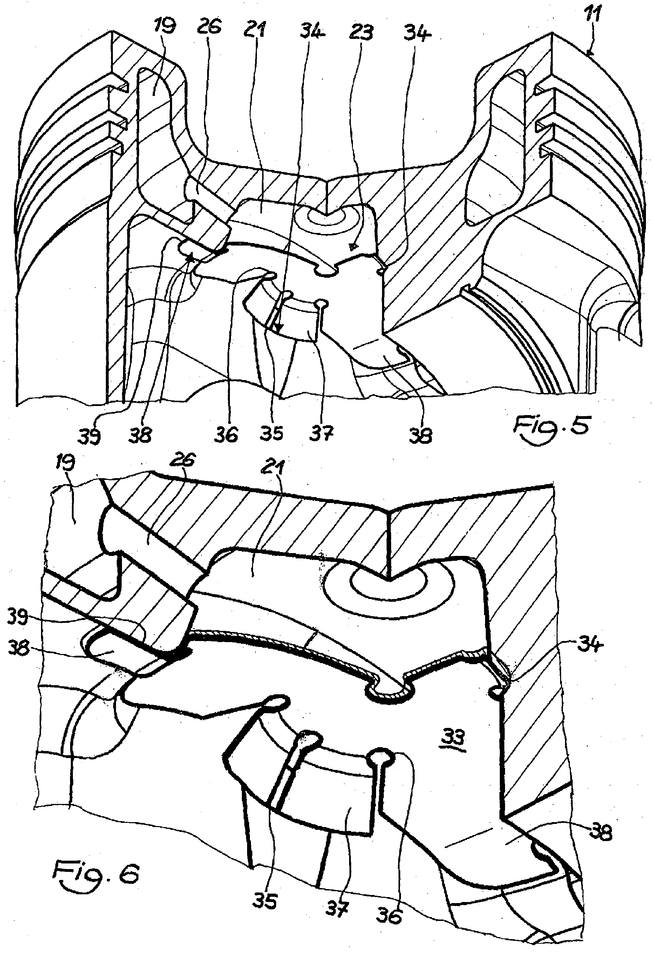

Die Figuren 4 bis 6 zeigen im Detail, dass die Öffnung 23 im Kühlraumboden 22 mit einem Verschlusselement 33 verschlossen ist, das im Wesentlichen korrespondierend zur Öffnung 23 ausgebildet ist, um diese zuverlässig verschließen zu können. Das Verschlusselement 33 ist im Ausführungsbeispiel aus einem Federblech hergestellt, etwa 0,8mm dick und in der Öffnung 23 klemmend gehalten. Zu diesem Zweck sind im Kolbeninneren im Kolbenunterteil 12 im Bereich der Öffnung 23 zwei mittig angeordnete, einander gegenüberliegende Rastnuten 34 vorgesehen. Stattdessen kann auch eine einzelne umlaufende Rastnut vorgesehen sein.

Wie sich insbesondere aus Figur 4 ergibt, weist das Verschlusselement 33 im Ausführungsbeispiel einen im Wesentlichen rechteckförmigen Grundkörper 41 mit einer zentralen Öffnung 41 a auf. Die Form des Grundkörpers 41 korrespondiert zur Öffnung 23 im Kühlraumboden 22, um diese zuverlässig verschließen zu können. An den Längsseiten des Grundkörpers 41 sind je zwei federnde Rastelemente 37 vorgesehen, die paarweise einander diametral gegenüber angeordnet sind. Die im Ausführungsbeispiel als Rastzungen ausgebildeten Rastelemente 37 sind mittels sich radial nach innen erstreckender Schlitze 35 voneinander getrennt, welche jeweils in eine Rundung 36 münden. An den beiden Querseiten des Grundkörpers 41 ist jeweils eine Federlappe 38 vorgesehen. Die Federlappen 38 sind in ihrem Übergangsbereich zum Grundkörper 41 von sich radial nach innen erstreckenden, in eine Rundung 36 mündenden Schlitzen 35 begrenzt. Die Schlitze 35 und die Rundungen 36 dienen zusammen mit der zentralen Öffnung 41 a als Kühlölöffnungen, die im Betrieb das Abfließen des Kühlöls aus dem inneren Kühlraum 21 in Richtung des Kolbenbolzens ermöglichen. Die Schlitze 35 und Rundungen 36 sind im Ausführungsbeispiel aus dem Verschlusselement 33 ausgestanzt.

Zur Montage wird das Verschlusselement 33 aus Richtung der Nabenbohrungen 17 in die Öffnung 23 des Kühlraumbodens 22 eingeschoben. Dabei kommen zunächst die Federlappen 38 an einer Anlagefläche 39 im Inneren des Kolbens 10 zur Anlage. Die Anlageflächen 39 sind im Bereich der Nabenanbindungen 18 unterhalb der Rastnuten 34 ausgebildet.

Im weiteren Verlauf der Montage wird das Verschlusselement 33 weiter in Richtung Kühlraum 21 geschoben, so dass die Federlappen 38 mit einer Vorspannung beaufschlagt werden. Wenn die Rastelemente 37 die Rastnuten 34 erreichen, geben sie zunächst federnd nach und rasten anschließend unter Aufrechterhaltung der Federvorspannung in die Rastnuten 34 ein. Der Grundkörper 41 des Verschlusselements 33 überdeckt dann die Öffnung 23 im Kühlraumboden 22 praktisch vollständig. Falls gewünscht, kann ein schmaler Spalt 42 zwischen dem Grundkörper 41 und dem Kolbeninneren verbleiben, der als weitere Kühlölöffnung dienen kann (vgl. Figur 3).

Im Ergebnis wirkt im montierten Zustand eine Federvorspannung zwischen den Federlappen 38 und den Rastelementen 37 des Verschlusselements 33. Diese Federvorspannung wirkt in axialer Richtung und stabilisiert das Verschlusselement 33 gegenüber den beim Kolbenhub wirkenden Kräften in seinem Sitz. Die Federvorspannung kann in an sich bekannter Weise über die Dicke des gesamten Verschlusselements 33 bzw. einzelner seiner Bereiche und/oder über im Verschlusselement 33 eingebrachte Sicken eingestellt werden (nicht dargestellt).

## Patentansprüche

1. Kolben (10) für einen Verbrennungsmotor, mit einem äußeren umlaufenden Kühlkanal (19) und einem inneren Kühlraum (21), dessen Kühlraumboden (22) eine Öffnung (23) aufweist, die mit einem separaten, aus einem Stahlfederblech hergestellten Verschlusselement (33) verschlossen ist, das mindestens eine Kühlölöffnung (35) aufweist, wobei das Verschlusselement (33) mittels mindestens zweier am äußeren Rand angeordneter, einander diametral gegenüberliegender Rastelemente (37) in mindestens einer im Bereich von Nabenanbindungen (18) vorgesehenen Rastnut (34) klemmend gehalten ist, **dadurch gekennzeichnet, dass** das Verschlusselement (33) mindestens zwei einander diametral gegenüberliegende Federlappen (38) aufweist, die sich jeweils an einer im Kolbeninneren an einer im Bereich der Nabenanbindungen (18) unterhalb, nämlich in Richtung weg vom Kühlraum (21), der mindestens einen Rastnut (34) vorgesehenen Anlagefläche (39) derart abstützen, dass das Verschlusselement (33) unter axialer Vorspannung zwischen den Federlappen (38) und den Rastelementen (37) in der mindestens einen Rastnut (34) gehalten ist.

2. Kolben nach Anspruch 1, **dadurch gekennzeichnet, dass** die Rastelemente (37) als Rastzungen ausgebildet sind.

3. Kolben nach Anspruch 1, **dadurch gekennzeichnet, dass** das Verschlusselement (33) zwei oder mehr Kühlölöffnungen (35) aufweist.

4. Kolben nach Anspruch 1, **dadurch gekennzeichnet, dass** die mindestens eine Kühlölöffnung (35) im Verschlusselement (33) als sich vom Rand des Verschlusselements (33) radial nach innen erstreckender Schlitz ausgebildet ist.

5. Kolben nach Anspruch 1, **dadurch gekennzeichnet, dass** die Rastelemente (37) und/oder die Federlappen (38) von jeweils von sich vom Rand des Verschlusselements (33) radial nach innen erstreckenden Schlitzen begrenzt sind.

6. Kolben nach Anspruch 1, **dadurch gekennzeichnet, dass** zwischen dem Kolbeninneren und dem Verschlusselement (33) im Bereich der Federlappen (38) ein schmaler Spalt (42) vorgesehen ist.

7. Kolben nach Anspruch 1, **dadurch gekennzeichnet, dass** die Öffnung (23) im Kühlraumboden (22) und das Verschlusselement (33) im Wesentlichen rund ausgebildet sind.

8. Kolben nach Anspruch 1, **dadurch gekennzeichnet, dass** die Öffnung (23) im Kühlraumboden (22) oval oder als Langloch und das Verschlusselement (33) hierzu korrespondierend ausgebildet ist.

9. Kolben nach Anspruch 1, **dadurch gekennzeichnet, dass** er als zweiteiliger Kolben mit einem Kolbenoberteil (11) und einem Kolbenunterteil (12) ausgebildet ist.

## Claims

1. A piston (10) for an internal combustion engine, with a cooling duct (19) running around the outside and a cooling chamber (21) inside, the cooling chamber floor (22) having an opening (23) that is closed with a separate closure element (33) that is made of spring steel sheet and that has at least one cooling oil opening (35) and that is held by at least two diametrically opposite catches (37) arranged on the outer edge that snap into at least one snap-in groove (34) provided in the area of boss connections (18), **characterized in that** the closure element (33) has at least two diametrically opposite spring tabs (38), each of which is supported on a bearing surface (39) provided inside the piston in the area of the boss connections (18) below the at least one snap-in groove (34), namely in the direction away from the cooling chamber (21), in such a way in such a way that the closure element (33) is held in the at least one snap-in groove (34) under axial pretension between the spring tabs (38) and the catches (37).

2. The piston according to claim 1, **characterized in that** the catches (37) are in the form of snap-in tongues.

3. The piston according to claim 1, **characterized in that** the closure element (33) has two or more cooling oil openings (35).

4. The piston according to claim 1, **characterized in that** the at least one cooling oil opening (35) in the closure element (33) is in the form of a slot extending radially inward from the edge of the closure element (33).

5. The piston according to claim 1, **characterized in that** the catches (37) and/or the spring tabs (38) are each bordered by slots extending radially inward from the edge of the closure element (33).

6. The piston according to claim 1, **characterized in that** a narrow gap (42) is provided in the area of the spring tabs (38) between the inside of the piston and the closure element (33).

7. The piston according to claim 1, **characterized in that** the opening (23) in the cooling chamber floor (22) and the closure element (33) are essentially round.

8. The piston according to claim 1, **characterized in that** the opening (23) in the cooling chamber floor (22) is oval or in the form of an elongated hole and the closure element (33) is corresponding shaped.

9. The piston according to claim 1, **characterized in that** it is in the form of a two-part piston with a top piston part (11) and a bottom piston part (12).

## Revendications

1. Piston (10) pour un moteur à combustion, avec un canal de refroidissement (19) périphérique externe et un espace de refroidissement (21) interne, dont le fond d'espace de refroidissement (22) présente un orifice (23), qui est fermé avec un élément de fermeture (33) séparé, fabriqué dans une tôle en acier ultra légère, qui présente au moins un orifice pour de l'huile de refroidissement (35), où l'élément de fermeture (33) est maintenu fixé au moyen d'au moins deux éléments de butée (37) disposés sur le bord extérieur, situés opposés diamétralement l'un par rapport à l'autre, dans au moins une rainure de butée (34) prévue dans la zone des fixations de moyeu (18), **caractérisé en ce que** l'élément de fermeture (33) présente au moins deux languettes élastiques (38) situées opposées diamétralement l'une à l'autre qui s'appuient chacune sur une surface d'appui (39) prévue à l'intérieur du piston dans la zone des fixations de moyeu (18), c'est-à-dire en s'éloignant de l'espace de refroidissement (21), en dessous de l'au moins une rainure de butée (34), de telle manière que l'élément de fermeture (33) est maintenu dans l'au moins une rainure de butée (34) sous une précontrainte axiale entre les languettes élastiques (38) et les éléments de butée (37).

2. Piston selon la revendication 1, **caractérisé en ce que** les éléments de butée (37) sont conçus sous la forme de languettes de butée.

3. Piston selon la revendication 1, **caractérisé en ce que** l'élément de fermeture (33) présente deux ou plusieurs orifices pour de l'huile de refroidissement (35).

4. Piston selon la revendication 1, **caractérisé en ce que** l'au moins un orifice pour de l'huile de refroidissement (35) est conçu dans l'élément de fermeture (33) sous la forme d'une fente s'étendant radialement du bord de l'élément de fermeture (33) vers l'intérieur.

5. Piston selon la revendication 1, **caractérisé en ce que** les éléments de butée (37) et/ou les languettes élastiques (38) sont délimités par les fentes s'étendant radialement du bord de l'élément de fermeture (33) vers l'intérieur.

6. Piston selon la revendication 1, **caractérisé en ce qu'**une fente (42) fine est prévue entre l'intérieur du piston et l'élément de fermeture (33) dans la zone des languettes élastiques (38).

7. Piston selon la revendication 1, **caractérisé en ce que** l'orifice (23) dans le fond de l'espace de refroidissement (22) et l'élément de fermeture (33) sont conçus essentiellement circulaires.

8. Piston selon la revendication 1, **caractérisé en ce que** l'orifice (23) dans le fond de l'espace de refroidissement (22) est conçu ovale ou sous forme d'un trou oblong et l'élément de fermeture (33) est conçu de manière correspondante à celui-ci.

9. Piston selon la revendication 1, **caractérisé en ce qu'**il est conçu comme un piston en deux parties avec une partie supérieure de piston (11) et une partie inférieure de piston (12).
